# EUROPÄISCHE PATENTSCHRIFT

(11) **EP 4 479 954 B1**
(45) Veröffentlichungstag und Bekanntmachung des Hinweises auf die Patenterteilung: **19.11.2025**
(21) Anmeldenummer: 23704978.8
(22) Anmeldetag: 13.02.2023
(51) Int. Cl.: G07C 9/00, B64D 45/00

(54) **ZUGANGSKONTROLLVORRICHTUNG, ZUGANGSKONTROLLSYSTEM, TÜRABSCHNITT MIT ZUGANGSKONTROLLVORRICHTUNG SOWIE VERFAHREN ZUM ÖFFNEN EINER TÜR**
ACCESS CONTROL DEVICE, ACCESS CONTROL SYSTEM, DOOR PORTION HAVING AN ACCESS CONTROL DEVICE, AND METHOD FOR OPENING A DOOR
DISPOSITIF DE COMMANDE D'ACCÈS, SYSTÈME DE COMMANDE D'ACCÈS, PARTIE DE PORTE COMPRENANT UN DISPOSITIF DE COMMANDE D'ACCÈS ET PROCÉDÉ D'OUVERTURE D'UNE PORTE

(30) Priorität: 17.02.2022 DE 102022103754
(43) Veröffentlichungstag der Anmeldung: 25.12.2024
(73) Patentinhaber: Lufthansa Technik AG, 22335 Hamburg (DE)
(72) Erfinder: GIESEKING, Florin, 6005 Lucerne (CH)
(74) Vertreter: Müller Verweyen
(86) Internationale Anmeldenummer: PCT/EP2023/053473
(87) Internationale Veröffentlichungsnummer: WO 2023/156333

(56) Entgegenhaltungen:
- EP-A1- 3 654 298
- US-A1- 2014 316 612
- US-A1- 2016 371 907

## Beschreibung

Die vorliegende Erfindung betrifft eine Zugangskontrollvorrichtung mit den Merkmalen des Oberbegriffs von Anspruch 1, ein Zugangskontrollsystem mit den Merkmalen des Oberbegriffs von Anspruch 10, einen Türabschnitt mit den Merkmalen des Oberbegriffs von Anspruch 11, sowie ein Verfahren mit den Merkmalen des Oberbegriffs von Anspruch 14.

Um zugangsbeschränkte Bereiche vor unberechtigtem Zutritt zu schützen, sind entsprechende Türen oder Klappen, die den Zugang physisch verhindern sollen, zumeist mit einem Zugangskontrollsystem ausgestattet. Solch ein Zugangskontrollsystem kann beispielsweise durch einen Schließmechanismus gebildet sein, der durch einen konventionellen, physischen Schlüssel betätigbar ist.

Zur Vereinfachung der Verwaltung von Zugangsberechtigungen ist es ebenfalls hinlängliche bekannt, elektronische Zugangskontrollsysteme einzusetzen, bei denen beispielsweise eine Zugangsberechtigungskarte einen digitalen Schlüssel speichert, der dann mittels eines Lesegeräts einer Zugangskontrollvorrichtung ausgelesen werden kann. Berechtigt der digitale Schlüssel zum Zutritt, wird beispielsweise eine Tür entriegelt, so dass diese geöffnet werde kann.

Ein solches elektronisches Zugangssystem ist beispielsweise aus der US 2003/0006879 A1 bekannt. Dort wird ein Türkontrollsystem offenbart, das es erlaubt, eine Tür mittels einer drahtlos auslesbaren Zugangsberechtigungskarte zu öffnen und zu schließen. Nachteilig an dieser Lösung ist jedoch, dass allein die Zugangsberechtigungskarte genügt, um einem Nutzer Zugang zu einem zugangskontrollierten Bereich zu verschaffen. Somit besteht bei Verlust der Zugangsberechtigungskarte ein Sicherheitsrisiko.

Gerade im Bereich der Luftfahrt spielen Zugangsbeschränkungen eine zentrale Rolle für die Sicherheit. Insbesondere im Bereich der VIP-Flugzeuge besteht der Bedarf, das Flugzeug vor unberechtigtem Zutritt zu schützen. Gerade die Sicherung der Kabine und der Frachträume solcher Flugzeuge ist für Eigentümer solcher Maschinen von entscheidender Bedeutung, beispielsweise wenn solch ein VIP-Flugzeug über Nacht auf dem Vorfeld geparkt wird.

Es ist daher aus der US 2011/0273269 A1 ein zentral steuerbares System zum Überwachen und Verschließen von Flugzeugtüren bekannt. Nachteilig an dieser Lösung ist jedoch, dass sie in die Systemarchitektur des Flugzeugs eingebunden sein muss, so dass ein Nachrüsten von Flugzeugen mit dieser Lösung nur mit erheblichem Aufwand möglich ist.

Aus der US 2014/0316612 A1 ist ein System zur Ermöglichung des Zugangs zu einem Fahrzeug bekannt, wenn die Hauptbatterie nicht in der Lage ist, ausreichend Energie für die Betätigung der elektrischen Schlösser des Fahrzeugs zu liefern. Hierzu ist eine Fernzugangseinrichtung vorgesehen, die über eine entsprechende Authentifizierungseinrichtung im Fahrzeug authentifiziert werden kann. Zusätzlich ist eine externe Stromversorgungseinrichtung vorgesehen. Im Inneren des Fahrzeugs ist eine Einrichtung angeordnet, um Energie von der externen Energieversorgungseinrichtung der Authentifizierungseinrichtung und Mitteln zum Versetzen der elektrischen Schlösser in einen verriegelten oder einen entriegelten Zustand bereitzustellen.

Die EP 3 654 298 A1 offenbart eine Zugriffseinrichtung zur Anordnung in einem Kraftfahrzeug umfassend einen elektrischen Antrieb, der über einen Betätigungsabschnitt auf eine Öffnungsverriegelung einwirkt. Ferner ist eine Versorgungsschnittstelle zur Spannungsversorgung von einer externen Spannungsquelle vorgesehen, so dass darüber der elektrische Antrieb versorgt werden kann.

Die US 2016/0371907 A1 offenbart einen elektronischen Schlüssel ohne Stromversorgung, der zum Entriegeln eines elektronischen Türschlosses eines Fortbewegungsmittels, beispielsweise eines Autos, oder zum Entriegeln eines elektronischen Schlosses einer Diebstahlsicherung verwendet werden kann.

Es ist Aufgabe der vorliegenden Anmeldung, eine verbesserte Zugangskontrollvorrichtung für Türen eines Fahrzeuges, insbesondere eines Luftfahrzeugs, anzugeben sowie ein korrespondierendes Zugangskontrollsystem, einen korrespondierenden Türabschnitt sowie ein korrespondierendes Verfahren.

Die Aufgabe wird durch die Merkmale der unabhängigen Ansprüche gelöst. Weitere bevorzugte Ausführungsformen der Erfindung sind den Unteransprüchen, den Figuren und der dazugehörigen Beschreibung zu entnehmen.

Gemäß einem ersten Aspekt der Erfindung wird die Aufgabe gelöst durch eine Zugangskontrollvorrichtung für eine Tür eines Fahrzeugs, insbesondere eines Luftfahrzeugs, umfassend ein Stellelement, das von einem Sperrzustand in einen Freigabezustand und umgekehrt bringbar ist; eine Energieversorgungsschnittstelle, über die die Zugangskontrollvorrichtung mit Energie versorgbar ist; eine Steuereinheit, die dazu eingerichtet ist, den Zustand des Stellelements zu steuern und/oder zu regeln; eine Nahfeldkommunikationsschnittstelle, die zum Auslesen einer digitalen Zugangsberechtigung und Übermitteln der digitalen Zugangsberechtigung an die Steuereinheit eingerichtet ist; wobei die Steuereinheit dazu eingerichtet ist, den Zustand des Stellelements in Abhängigkeit der Gültigkeit der digitalen Zugangsberechtigung zu steuern und/oder zu regeln, wobei die Energieversorgungsschnittstelle zum Anschließen eines portablen Energiespeichers ohne Zuhilfenahme von Werkzeug eingerichtet ist.

Zunächst seien einige im Rahmen dieser Anmeldung verwendete Begriffe definiert.

Unter einem Anschließen ohne Zuhilfenahme von Werkzeug ist im Sinne dieser Anmeldung zu verstehen, dass ein Nutzer den portablen Energiespeicher mit den bloßen Händen anschließen kann. Dies bedeutet aber nicht, dass die Energieversorgungsschnittstelle zwangsläufig freiliegend sein muss. Diese kann beispielsweise durch einen Schutzeinrichtung vor äußeren Umgebungseinflüssen, wie beispielsweise Staub und/oder Nässe, geschützt werden, solange die Schutzeinrichtung mit der bloßen Hand entfernt werden kann.

Unter einer gültigen digitalen Zugangsberechtigung ist im Sinne dieser Anmeldung eine digital speicherbare Berechtigung zu verstehen, beispielsweise in Form eines Codes oder eines Datensatzes, die einen Benutzer dazu berechtigt, das Stellelement der Zugangskontrollvorrichtung zu betätigen.

Eine Energieversorgungsschnittstelle im Sinne dieser Anmeldung kann eine kontaktbasierte Schnittstelle sein, bei der die Energieversorgung mittels elektrisch leitender Kontaktstellen erfolgt. Die Kontaktstellen sind dann Bestandteil der Energieversorgungsschnittstelle. Weiterhin kann die Energieversorgungsschnittstelle aber auch derart ausgeführt sein, dass die Energieversorgung kontaktlos, beispielsweise mittels einer Induktionsschleife, erfolgen kann. In diesem Fall ist die Induktionsschleife Bestandteil der Energieversorgungsschnittstelle.

Durch die einfache Zugänglichkeit der Energieversorgungsschnittstelle kann der Benutzer auf komfortable Weise einen portablen Energiespeicher an die Energieversorgungsschnittstelle anschließen. So wird die Zugangskontrollvorrichtung nur bei Bedarf mit Energie versorgt; es wird also eine sogenannte "Power on Demand" Lösung geschaffen. Die Energieversorgung mittels der vorgeschlagenen Energieversorgungsschnittstelle bietet den Vorteil, dass die Zugangskontrollvorrichtung nicht an ein Stromnetz angebunden werden muss. So kann beim Einsatz der Zugangskontrollvorrichtung in einem Fahrzeug eine Segregation der Stromversorgung der Zugangskontrollvorrichtung von dem bordeigenen Stromnetz erreicht werden. Insbesondere beim Einsatz in einem Flugzeug ist dies von Vorteil, weil die Anbindung zusätzlicher Ein- bzw. Anbauten an das bordeigene Stromnetz nicht nur technisch aufwendig sein kann, sondern auch entsprechend luftrechtlicher Vorgaben zugelassen werden muss. Weiterhin kann durch die vorgeschlagene Energieversorgungsschnittstelle eine interne Batterie oder ein interner Acku der Zugangskontrollvorrichtung entfallen, so dass sich der Wartungsaufwand reduziert.

Die Energieversorgungsschnittstelle ist vorzugsweise dazu eingerichtet, eine ausreichende elektrische Leistung zu übertragen, so dass das Stellelement allein durch die Energieversorgung der Energieversorgungsschnittstelle betätigt werden kann. Vorzugsweise ist die Energieversorgungsschnittstelle dazu eingerichtet, elektrische Energie zu übertragen, die durch den portablen Energiespeicher in Form von 2 bis 10 Volt Gleichstrom, weiter beispielsweise 4 bis 6 Volt Gleichstrom, insbesondere vorzugsweise 5 Volt Gleichstrom bereitgestellt wird.

Bei der Nahfeldkommunikationsschnittstelle handelt es sich vorzugsweise um eine Schnittstelle, die auf Basis der Radio-Frequency Identification (RFID) Technologie arbeitet. Die digitale Zugangsberechtigung ist beispielsweise auf einer Berechtigungseinheit, vorzugsweise in Form einer Zugangsberechtigungskarte, gespeichert. Wird die Berechtigungseinheit dann in die Nähe der Nahfeldkommunikationsschnittstelle gehalten, beispielsweise in einem Abstand von weniger als 10 cm, dann kann die auf der Karte gespeicherte Zugangsberechtigung mittels der Nahfeldkommunikationsschnittstelle ausgelesen und von dieser an die Steuereinheit übertragen werden.

Vorzugsweise umfasst das Stellelement einen Aktuator sowie einen Riegel oder ein anderes Element, das vom Aktuator in verschiedenen Schaltstellungen bringbar ist. Der Riegel oder das andere Element ist beispielsweise verschiebbar, verschwenkbar und/oder rotierbar gelagert, so dass es zwischen verschiedenen Schaltstellungen bewegt werden kann. Je nach Schaltstellung befindet sich dann das Stellelement beispielsweise im Sperrzustand oder im Freigabezustand.

Vorzugsweise ist die Steuereinheit dazu eingerichtet, die Gültigkeit einer über die Nahfeldkommunikationsschnittstelle übermittelten Zugangsberechtigung zu verifizieren, wobei die Steuereinheit dazu eingerichtet ist, ein Steuersignal zu generieren, wenn die digitale Zugangsberechtigung mittels der Steuereinheit als gültig verifiziert wurde und die Energieversorgungsschnittstelle mittels eines portablen Energiespeichers mit Energie versorgt wird. Das so generierte Steuersignal bewirkt beispielsweise, dass das Stellelement in den Freigabezustand gebracht wird. Das Steuersignal kann aber beispielsweise auch bewirken, dass das Stellelement in den Sperrzustand gebracht wird. Mittels der vorgeschlagenen Lösung ist es daher beispielsweise möglich, eine Tür zu verriegeln und zu entriegeln, oder beispielsweise die Betätigbarkeit eines Türgriffs zuzulassen oder zu unterbinden. Die Energieversorgung mittels der Energieversorgungsschnittstelle als Bedingung für das Schalten des Stellelements in den Freigabezustand oder den Sperrzustand, kann die Sicherheit im Vergleich zu Lösungen, die nur mit einer digitalen Zugangsberechtigung arbeiten, erhöht werden. Der Benutzer benötigt zur Betätigung des Stellelements neben der Zugangsberechtigung stets auch einen passenden portablen Energiespeicher. Es wird somit eine Zwei-Faktor-Authentifizierung erreicht. Die Sicherheit kann noch weiter gesteigert werden, indem die Energieversorgungsschnittstelle derart eingerichtet ist, dass keine handelsüblichen Energiespeicher daran angeschlossen werden können.

Gemäß einer weiteren bevorzugten Ausführungsform wird zum Zugänglichmachen der Energieversorgungsschnittstelle ohne Zuhilfenahme von Werkzeug vorgeschlagen, dass die Zugangskontrollvorrichtung ein Gehäuse umfasst, das einen Innenraum bildet, wobei zumindest die Steuereinheit in dem Innenraum angeordnet ist, wobei die Energieversorgungsschnittstelle auf der dem Innenraum abgewandten Außenseite des Gehäuses angeordnet ist. Das Gehäuse kann beispielsweise durch ein Gehäuseteil oder mehrere Gehäuseteile gebildet sein. Weiterhin ist es auch möglich, dass das Gehäuse mit Komponenten der Tür, eines Türrahmens und/oder eines Türschlosses zusammenwirkt, an der die Zugangskontrollvorrichtung verbaut ist; in diesem Fall kann es sein, dass der Innenraum erst durch den Verbau des Gehäuses mit den weiteren Komponenten gebildet wird. Zusätzlich zu der Steuereinheit können noch weitere Komponenten der Zugangskontrollvorrichtung in dem Innenraum angeordnet sein, entscheidend ist jedoch, dass die Energieversorgungsschnittstelle und vorzugsweise zusätzlich auch die Nahfeldkommunikationsschnittstelle an der Außenseite angeordnet ist/sind. So kann für den Benutzer eine einfache Zugänglichkeit der Schnittstellen gewährleistet werden.

Vorzugsweise ist der durch das Gehäuse gebildete Innenraum gegenüber der Umgebung hermetisch abgedichtet ist, beispielsweise mittels einer Dichtung. Bei einem mehrteiligen Gehäuse kann die Dichtung beispielsweise zwischen zwei Gehäuseteilen angeordnet sein und/oder zwischen einem Gehäuseteil und einer angrenzenden Komponente, beispielsweise einem Türgriff.

Gemäß einer weiteren bevorzugten Ausführungsform wird zum Zugänglichmachen der Energieversorgungsschnittstelle ohne Zuhilfenahme von Werkzeug vorgeschlagen, dass sowohl die Energieversorgungsschnittstelle als auch die Nahfeldkommunikationsschnittstelle Bestandteil einer gemeinsamen Bedienoberfläche sind. Durch die Anordnung sowohl der Nahfeldkommunikationsschnittstelle als auch der Energieversorgungsschnittstell auf einer gemeinsamen Bedienoberfläche, wird der Bedienkomfort weiter gesteigert. Die Schnittstellen sind vorzugsweise lokal unmittelbar benachbart zueinander auf der bzw. an der Bedienoberfläche angeordnet, so dass die portable Berechtigungseinheit und der portable Energiespeicher sogar einhändig an die jeweilige Schnittstelle angebunden werden können.

Gemäß einer weiteren bevorzugten Ausführungsform wird vorgeschlagen, dass die Energieversorgungsschnittstelle ein Halteelement umfasst, das dazu eingerichtet ist, beispielsweise unter Wirkung einer Magnetkraft, den portablen Energiespeicher an der Energieversorgungsschnittstelle zu halten, so dass die Energieversorgungsschnittstelle durch einen portablen Energiespeicher mit Energie versorgt wird. Durch die Haltevorrichtung kann zunächst der portable Energiespeicher im mit der Energieversorgungsschnittstelle verbundenen Zustand temporär gehalten werden, so dass der Benutzer mit erhöhtem Komfort sich zur Betätigung des Stellelements nur noch um die Positionierung der portablen Berechtigungseinheit in der Nähe der Nahfeldkommunikationsschnittstelle kümmern muss. Wenn nachfolgend von einer Positionierung der portablen Berechtigungseinheit in der Nähe der Nahfeldkommunikationsschnittstelle die Rede ist, ist damit ein Abstand der beiden Komponenten von weniger als 10 cm voneinander gemeint. Damit der portable Energiespeicher beispielsweise durch die Wirkung einer Magnetkraft an der Energieversorgungsschnittstelle gehalten werden kann, kann diese einen Permanentmagneten umfassen.

Vorzugsweise weist die Energieversorgungsschnittstelle eine Ausnehmung auf, in die der portable Energiespeicher einsetzbar ist. Durch die Ausnehmung kann der portable Energiespeicher zuverlässig gelagert und positioniert werden, während er an die Energieversorgungsschnittstelle angebunden ist. Vorzugsweise ist die Ausnehmung formkorrespondierend zu einer Außenkontur des portablen Energiespeichers ausgeführt. Weiterhin hat es sich als vorteilhaft erwiesen, die Ausnehmung mit dem Halteelement zu kombinieren.

Vorzugsweise sind die Energieversorgungsschnittstelle und/oder die Nahfeldkommunikationsschnittstelle jeweils durch wenigstens ein visuelles Mittel für einen Nutzer kenntlich gemacht. Eine solche Kenntlichmachung erlaubt es dem Benutzer, den portablen Energiespeicher und/oder die portable Berechtigungseinheit direkt der richtigen Schnittstelle zuzuordnen. Grundsätzlich würde es zwar genügen, eine der Schnittstellen mit einem entsprechenden visuellen Mittel kenntlich zu machen, weil dann auch die andere Schnittstelle nach dem Ausschlussprinzip zugeordnet werden kann. Allerdings hat es sich in der Praxis aus Komfortgründen als vorteilhaft erwiesen, sowohl die Nahfeldkommunikationsschnittstelle als auch die Energieversorgungsschnittstelle mit jeweils einem visuellen Mittel auszustatten. Vorzugsweise kann eines oder mehrere der visuellen Mittel auch selbstleuchtend ausgeführt sein, was beispielsweise durch fluoreszierende Bestandteile eines visuellen Mittels erreicht werden kann. So kann auch bei dunklen Umgebungsbedingungen ein einfaches Auffinden der Energieversorgungsschnittstelle und der Nahfeldkommunikationsschnittstelle sichergestellt werden.

Erfindungsgemäß umfasst die Energieversorgungsschnittstelle eine zusätzliche Nahfeldkommunikationsschnittstelle, die zum Auslesen einer zusätzlichen digitalen Zugangsberechtigung und Übermitteln der zusätzlichen digitalen Zugangsberechtigung an die Steuereinheit eingerichtet ist. Ein entsprechendes Steuersignal, das die Bewegung des Stellelements in den Freigabezustand oder in den Sperrzustand bewirkt, wird erst dann generiert, wenn die folgenden drei Bedingungen erfüllt sind. Erstens, die Energieversorgungsschnittstelle wird mittels des portablen Energiespeichers mit Energie versorgt. Zweitens, die über die Nahfeldkommunikationsschnittstelle ausgelesene digitale Zugangsberechtigung ist gültig. Drittens, die über die zusätzliche Nahfeldkommunikationsschnittstelle ausgelesene zusätzliche digitale Zugangsberechtigung ist ebenfalls gültig. Durch das Anschließen des portablen Energiespeichers an die Energieversorgungsschnittstelle kann gleichzeitig auch die zusätzliche digitale Zugangsberechtigung ausgelesen werden, die auf einem Speicher des portablen Energiespeichers für die zusätzliche Nahfeldkommunikationsschnittstelle abrufbar hinterlegt ist. Es wird so eine Drei-Faktor-Authentifizierung als Voraussetzung für die Betätigbarkeit des Stellelements erreicht.

Vorzugsweise ist das Stellelement bistabil oder monostabil schaltbar. Wenn das Stellelement monostabil schaltbar ist, dann ist der stabile Zustand der Sperrzustand. Sofern das Stellelement bistabil schaltbar ist, bilden sowohl der Freigabezustand als auch der Sperrzustand jeweils einen stabilen Zustand. Im Falle des bistabil schaltbaren Stellelements kann das Stellelement zusätzlich von dem Freigabezustand in den Sperrzustand gebracht werden, wenn die gleichen Bedingungen vorliegen wie beim Generieren des Steuersignals, das das Schalten in den Freigabezustand bewirkt.

Gemäß einer weiteren bevorzugten Ausführungsform wird vorgeschlagen, dass das Stellelement monostabil schaltbar ist, wobei ein Kondensator zur temporären Versorgung des Stellelements mit elektrischer Energie vorgesehen ist, so dass das Stellelement für eine vordefinierte Zeitspanne im instabilen Zustand verbleiben kann, wenn die Energieversorgungsschnittelle nicht mit Energie versorgt wird. Das Stellelement umfasst vorzugsweise einen Aktuator, beispielsweise in Form eines Schaltmagneten, der bei Beaufschlagung mit einer entsprechenden elektrischen Spannung einen Riegel entgegen der Kraft einer Feder bewegt. Wenn der Riegel entgegen der Kraft der Feder bewegt wurde, befindet sich das Stellelement in dem Freigabezustand. Wird der Riegel durch die Federkraft bei Wegfall der entsprechenden elektrischen Spannung zurückbewegt, dann befindet sich das Stellelement in dem Sperrzustand. Vorzugsweise hat der Kondensator eine Kapazität, die es erlaubt, eine ausreichende Energiemenge zu speichern, um das Stellelement für eine Dauer von 2 bis 20 Sekunden, weiter vorzugsweise für 5 bis 15 Sekunden, und insbesondere vorzugsweise für 10 Sekunden, in den Freigabezustand zu schalten. Wenn ein Benutzer mittels des portablen Energiespeichers und der portabler Berechtigungseinheit ein Schalten des Stellelements in den Freigabezustand bewirkt hat, wird er in aller Regel nicht sofort die Tür öffnen, sondern erst den portablen Energiespeicher sowie die portable Berechtigungseinheit von den Schnittstellen entfernen. Mangels Energieversorgung über die Energieversorgungsschnittstelle würde das Stellelement durch seine monostabile Eigenschaft sofort wieder in den Sperrzustand zurücckehren. Durch den Kondensator kann dieses Zurückschalten für eine ausreichend lange Zeitspanne verhindert werden, die es einem Benutzer ermöglicht, die Tür zu öffnen. Grundsätzlich wäre es aber auch möglich, die Funktion des Kondensators mittels einer Batterie oder eines Akkumulators zu verwirklichen.

Vorzugsweise umfasst die Zugangskontrollvorrichtung eine Datenschnittstelle zum Aktualisieren der gültigen Zugangsberechtigungen. So kann beispielsweise bei Verlust einer portablen Berechtigungseinheit die darauf gespeicherte digitale Zugangsberechtigung auf der Steuereinheit der Zugangskontrollvorrichtung gelöscht bzw. deaktiviert werden und dafür eine neue Zugangsberechtigung aktiviert bzw. hinzugefügt werden. Bei der Datenschnittstelle kann es sich beispielsweise um eine kabelgebundene Schnittstelle nach USB-Standard handeln, oder alternativ um eine drahtlose Datenschnittstelle, beispielsweise nach einem Bluetooth Standard.

Vorzugsweise umfasst die Zugangskontrollvorrichtung eine visuelle und/oder akustische Anzeigeeinrichtung, die dem Benutzer anzeigt, ob der portable Energiespeicher korrekt mit der Energieversorgungsschnittstelle verbunden ist und/oder ob mittels der Nahfeldkommunikationsschnittstelle ausgelesene Zugangsberechtigung gültig ist oder ungültig ist und/oder ob die Berechtigungseinheit wieder von der Nahfeldkommunikationsschnittstelle entfernt werden kann. Die visuelle Anzeigeeinrichtung kann durch wenigstens eine LED gebildet sein, die akustische Anzeigeeinrichtung kann durch wenigstens einen Lautsprecher gebildet sein.

Vorzugsweise umfasst die Zugangskontrollvorrichtung eine Übersteuerungseinheit, mit der das Stellelement unabhängig von dem Steuersignal der Steuereinheit mechanisch übersteuert werden kann.

Gemäß einem zweiten Aspekt dieser Anmeldung wird die eingangs genannte Aufgabe durch ein Zugangskontrollsystem für Türen eines Fahrzeugs, insbesondere eines Luftfahrzeugs gelöst, wobei das Zugangskontrollsystem umfasst: eine Zugangskontrollvorrichtung wie vorangehend beschrieben; eine portable Berechtigungseinheit, auf der eine digitale Zugangsberechtigung für die Nahfeldkommunikationsschnittstelle der Zugangskontrollvorrichtung abrufbar gespeichert ist; und einen portablen Energiespeicher, der dazu eingerichtet ist, die Zugangskontrollvorrichtung mittels der Energieversorgungsschnittstelle mit Energie zu versorgen.

Vorzugsweise handelt es sich bei der portablen Berechtigungseinheit um einen Transponder. Weiter vorzugsweise um einen passiven Transponder. Es hat sich in der Praxis bewährt, wenn die Berechtigungseinheit Checkkartenformat aufweist.

Vorzugsweise umfasst der portable Energiespeicher eine Batterie oder einen wiederaufladbaren Akku, mit einer Gleichstromspannung von zwischen 2 und 20 Volt, weiter beispielsweise zwischen 4 bis 6 Volt, insbesondere vorzugsweise 5 Volt. Die Kapazität der Batterie bzw. des Akkus beträgt dabei wenigstens 1000 mAh, vorzugsweise aber mehrere tausend mAh.

Bezüglich der mit dem Zugangskontrollsystem verbundenen technischen Wirkungen und Vorteile wird auf die vorangehenden Ausführungen im Zusammenhang mit der Zugangskontrollvorrichtung verwiesen.

Gemäß einem dritten Aspekt dieser Anmeldung wird zur Lösung der Aufgabe ein Türabschnitt, insbesondere eines Fahrzeugs, vorgeschlagen, umfassend eine Tür; einen Türrahmen; und ein Türschloss, das dazu eingerichtet ist, die Tür in einer geschlossenen Stellung in dem Türrahmen zu verriegeln, wobei eine Zugangskontrollvorrichtung wie vorangehend beschrieben vorgesehen ist, wobei das Stellelement derart mit dem Türschloss zusammenwirkt, dass die Verriegelung der Tür aufgehoben oder aufhebbar ist, wenn sich das Stellelement in dem Freigabezustand befindet. Entsprechend kann die geschlossene Tür nicht geöffnet werden, wenn sich das Stellelement im Sperrzustand befindet. Auf diese Weise kann ein sicheres Ver- und Entriegeln der Tür erreicht werden.

Es kann beispielsweise sowohl an einer Innenseite als auch an einer Außenseite des Türabschnitts jeweils eine Energieversorgungsschnittstelle sowie eine Nahfeldkommunikationsschnittstelle vorgesehen sein. Auf diese Weise kann die Zugangskontrollvorrichtung von innen und außen betätigt werden. Vorzugsweise ist das Stellelement in diesem Fall bistabil schaltbar, so dass auch ein komfortables Verschließen von innen möglich ist. Möchte sich beispielsweise ein Benutzer im Innenraum eines VIP-Flugzeugs aus Sicherheitsgründen einschließen, dann kann er die Tür schließen und durch Anbinden des portablen Energiespeichers und der portablen Berechtigungseinheit an die entsprechenden Schnittstellen das Stellelement in den Sperrzustand bringen; die Tür ist dann verschlossen. Das Stellelement verbleibt dann durch seine bistabile Eigenschaft auch nach Entfernen des portablen Energiespeichers (und der portablen Berechtigungseinheit) in dem Sperrzustand. Möchte der Benutzer dann wieder das Flugzeug verlassen, kann er durch erneutes Verbinden des portablen Energiespeichers und der portablen Berechtigungseinheit mit den entsprechenden Schnittstellen das Stellelement in den Freigabezustand bringen; die Tür kann dann wieder geöffnet werden.

Gemäß einer bevorzugten Ausführungsform wird vorgeschlagen, dass das Türschloss einen Türgriff umfasst, mit dem je nach dessen Stellung die Tür in dem Türrahmen verriegelt oder freigegeben ist, wobei das Stellelement dazu eingerichtet ist, in dem Sperrzustand eine Betätigbarkeit des Türgriffs zu verhindern, und wobei das Stellelement dazu eingerichtet ist, in dem Freigabezustand eine Betätigbarkeit des Türgriffs zuzulassen. Durch diese Art des Zusammenwirkens des Stellelements mit dem Türschloss kann die Zugangskontrollvorrichtung einfach nachgerüstet werden.

Gemäß einer weiteren bevorzugten Ausführungsform wird vorgeschlagen, dass der Türgriff eine um eine Schwenkachse verschwenkbare Klappe umfasst, wobei der Türgriff nur dann in eine die Tür entriegelnde Stellung bringbar ist, wenn die Verschwenkbarkeit der Klappe gegeben ist, wobei das Stellelement in dem Freigabezustand eine Verschwenkbarkeit der Klappe zulässt; und wobei das Stellelement in dem Sperrzustand eine Verschwenkbarkeit der Klappe unterbindet. Durch das Betätigen der Klappe kann beispielsweise eine Greifkante für einen Benutzer freigegeben werden, die er zum Betätigen des Türgriffs umgreifen muss. Solche Türgriffe mit Klappen sind aus dem Flugzeugbau bekannt. Sie werden beispielsweise bei Flugzeugtüren des Herstellers Airbus eingesetzt. Das Zusammenwirken des Stellelements mit der Klappe erlaubt es, den Türgriff indirekt zu blockieren. Auf diese Weise kann für Flugzeuge des Herstellers Airbus eine effizient nachzurüstende Lösung geschaffen werden. Prinzipiell finden sich solche Türgriffe an Passagiereingangstüren, Service Türen und an Frachtraumtüren von Flugzeugen des Herstellers Airbus; entsprechend können diese Türen auch mit der vorgeschlagenen Lösung nachgerüstet werden.

Gemäß einem vierten Aspekt dieser Anmeldung wird zur Lösung der Aufgabe ein Verfahren zum Öffnen einer geschlossenen und verriegelten Tür eines vorangehend beschriebenen Türabschnittes vorgeschlagen, das die folgenden Verfahrensschritte umfasst:
a) energietechnisches Verbinden des portablen Energiespeichers mit der Energieversorgungsschnittstelle; und anschließendes
b) signaltechnisches Verbinden der portablen Berechtigungseinheit mit der Nahfeldkommunikationsschnittstelle; und anschließendes
c) Öffnen der Tür.

Bezüglich der mit dem Verfahren verbundenen technischen Wirkungen und Vorteile wird auf die vorangehenden Ausführungen im Zusammenhang mit der Zugangskontrollvorrichtung und dem Türabschnitt verwiesen.

Die Erfindung wird im Folgenden anhand bevorzugter Ausführungsformen unter Bezugnahme auf die beigefügten Figuren erläutert. Dabei zeigt:
- Fig. 1: ein Zugangskontrollsystem;
- Fig. 2: eine Zugangskontrollvorrichtung an einem Türgriff;
- Fig. 3: einen Türgriff;
- Fig. 4: eine Explosionsdarstellung einer Zugangskontrollvorrichtung an einem Türgriff;
- Fig. 5: eine Detailansicht eines Türgriffs mit einer Zugangskontrollvorrichtung;
- Fig. 6: eine schematische Darstellung der Verschaltung der Zugangskontrollvorrichtung;
- Fig. 7: einen Türgriff einer Frachttür eines Flugzeugs;
- Fig. 8: eine Schnittdarstellung eines Türgriffs sowie eines Stellelements;
- Fig. 9: ein Flugzeug mit einem Türabschnitt; und
- Fig. 10: eine schematische Darstellung eines Verfahrens zum Öffnen einer verriegelten Flugzeugtür.

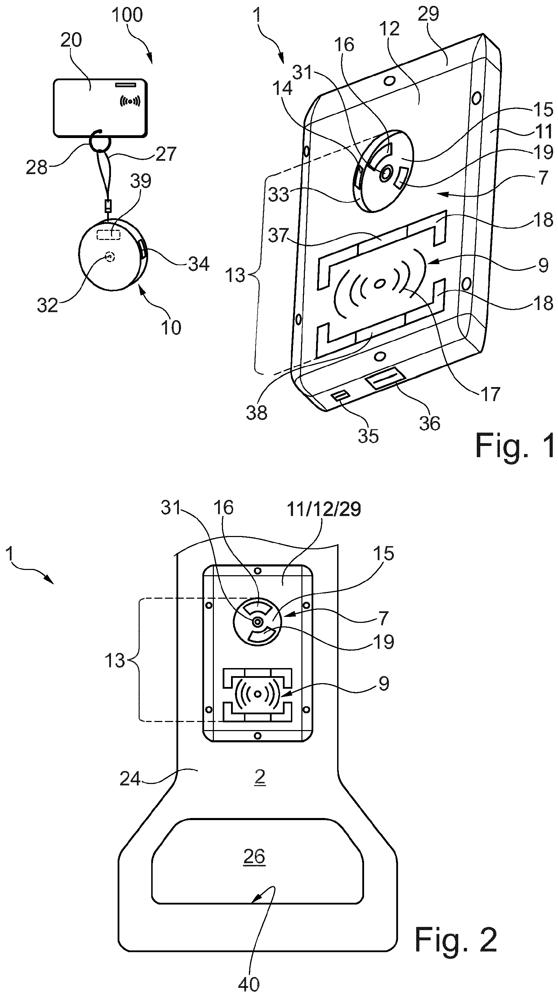

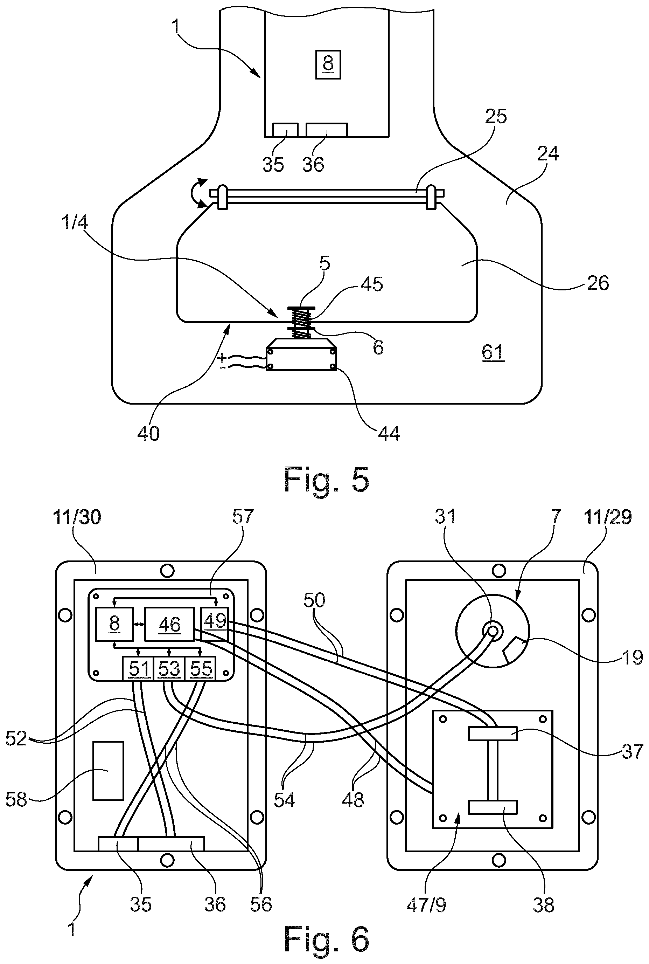

Figur 1 zeigt ein Zugangskontrollsystem 100 umfassend eine Zugangskontrollvorrichtung 1 sowie einen portablen Energiespeicher 10 und eine portable Berechtigungseinheit 20. Die Zugangskontrollvorrichtung 1 ist in Figur 1 nicht vollständig dargestellt, denn es ist beispielsweise ein Stellelement 4 nicht dargestellt. Die weiteren Komponenten der Zugangskontrollvorrichtung 1 werden aber nachfolgend noch anhand der Figuren 5 und 6 erläutert.

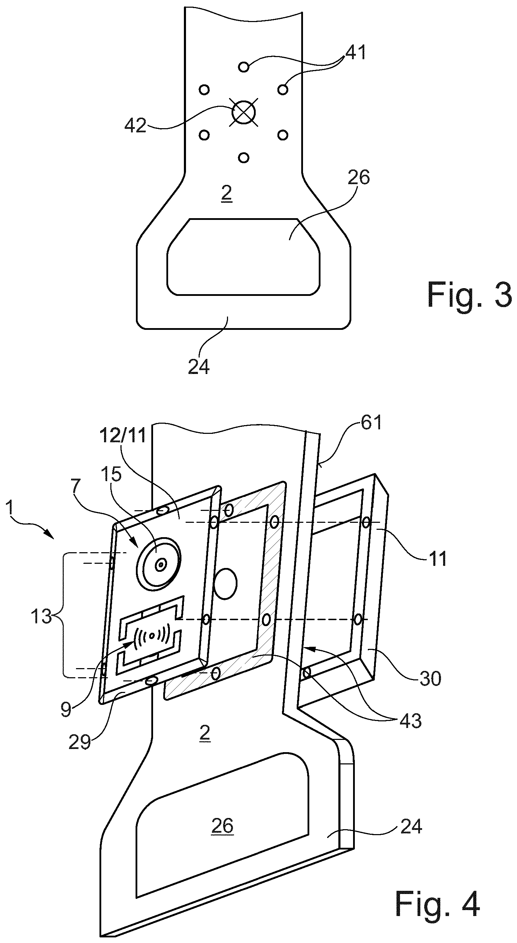

Die Zugangskontrollvorrichtung 1 umfasst ein erstes und ein zweites Gehäuseteil 29 und 30 (vgl. auch Figur 4), die zusammen ein Gehäuse 11 bilden. An einer Außenseite 12 des Gehäuses 11 ist sowohl eine Energieversorgungsschnittstelle 7 als auch eine Nahfeldkommunikationsschnittstelle 9 vorgesehen. Das Gehäuse 11 weist an der Außenseite 12 eine im wesentlichen plane Bedienoberfläche 13 auf, die sowohl die Energieversorgungsschnittstelle 7 als auch die Nahfeldkommunikationsschnittstelle 9 umfasst. Die beiden Schnittstellen 7 und 9 sind somit nebeneinander angeordnet, ohne durch Kanten oder andere Elemente des Gehäuses 11 voneinander getrennt zu sein. Dies ermöglicht einem Benutzer eine einfache Zugänglichkeit beider Schnittstellen 7 und 9.

Die Energieversorgungsschnittstelle 7 umfasst eine zylindrische Ausnehmung 15, die formkorrespondierend zu einer Außenkontur des portablen Energiespeichers 10 ausgeführt ist. Auf diese Weise kann der portable Energiespeicher 10 im eingesetzten Zustand, also wenn er mit der Energieversorgungsschnittstelle 7 verbunden ist, durch eine durch die Ausnehmung 15 gebildete Wandfläche 33 in Position gehalten werden. Die Energieversorgungsschnittstelle 7 umfasst zwei koaxial zueinander angeordnete, elektrisch leitfähige Kontakte 31, die dazu eingerichtet sind, mit korrespondierenden elektrisch leitfähigen Kontakten 32 des portablen Energiespeichers 10 verbunden zu werden. Weiterhin umfasst die Energieversorgungsschnittstelle 7 ein Halteelement 14 in Form eines Permanentmagneten. Das Halteelement 14 ist in der Wandfläche 33 der Ausnehmung 15 angeordnet. Ferner umfasst auch der portable Energiespeicher 10 ein Halteelement 34 in Form eines Permanentmagneten, so dass die beiden Halteelemente 33 und 34 derart zusammenwirken, dass der portable Energiespeicher 10 unter Wirkung einer Magnetkraft an der Energieversorgungsschnittstelle 7 fixierbar ist. In diesem Zustand kann die Zugangskontrollvorrichtung 1 mittels der aneinander anliegenden elektrischen Kontakte 31 und 32 mit elektrischer Energie versorgt werden.

Der portable Energiespeicher 10 umfasst eine Batterie oder einen wiederaufladbaren Akku (nicht dargestellt) mit einer Gleichstromspannung von 10 V und einer Kapazität mehreren Tausend Milliamperestunden.

Die Nahfeldkommunikationsschnittstelle 7 ist dazu eingerichtet, eine digitale Zugangsberechtigung von der portablen Berechtigungseinheit 20 auszulesen und an eine Steuereinheit 8 (vergleiche Figuren 5 und 6) zu übermitteln. Die Nahfeldkommunikationsschnittstelle 9 arbeitet auf Basis der Radio-Frequency Identification (RFID) Technologie. Die portable Berechtigungseinheit 20 umfasst daher einen passiven Transponder, auf dem die digitale Zugangsberechtigung abrufbar hinterlegt ist. Wie dargestellt weisen die Außenabmessungen der portablen Berechtigungseinheit 20 Scheckkartenformat auf. Sobald die portable Berechtigungseinheit 20 in die Nähe der Nahfeldkommunikationsschnittstelle 9 gebracht wird, also von dieser weniger als 10 cm entfernt ist, kann die digitale Zugangsberechtigung von der Nahfeldkommunikationsschnittstelle 9 ausgelesen werden und an die Steuereinheit 8 (vergleiche Figuren 5 und 6) übertragen werden.

Damit für einen Benutzer ersichtlich ist, wo die Nahfeldkommunikationsschnittstelle 9 und die Energieversorgungsschnittstelle 7 angeordnet sind, umfasst die Bedienoberfläche 13 diverse visuelle Mittel 16, 17 und 18. Das visuellen Mittel 16 kennzeichnet die Energieversorgungsschnittstelle 7 und kann beispielsweise mit der Bezeichnung "PWR", also der Abkürzung für "Power", kenntlich gemacht sein. Das weitere visuelle Mittel 17 umfasst ein Symbol, dass eine Drahtlosschnittstelle kennzeichnet. Das visuelle Mitte 18 deutet einen Rahmen an, der es dem Benutzer erlauben soll, die portable Berechtigungseinheit 20 korrekt gegenüber der Nahfeldkommunikationsschnittstelle 9 zu positionieren. Das visuelle Mittel 18 ist in diesem Fall durch eine fluoreszierende Bedruckung gebildet, so dass es auch bei schlechten Beleuchtungsverhältnissen von einem Benutzer wahrnehmbar ist. Grundsätzlich ist es auch möglich, dass auch die übrigen visuellen Mittel 16 und 17 durch eine fluoreszierende Bedruckung gebildet werden.

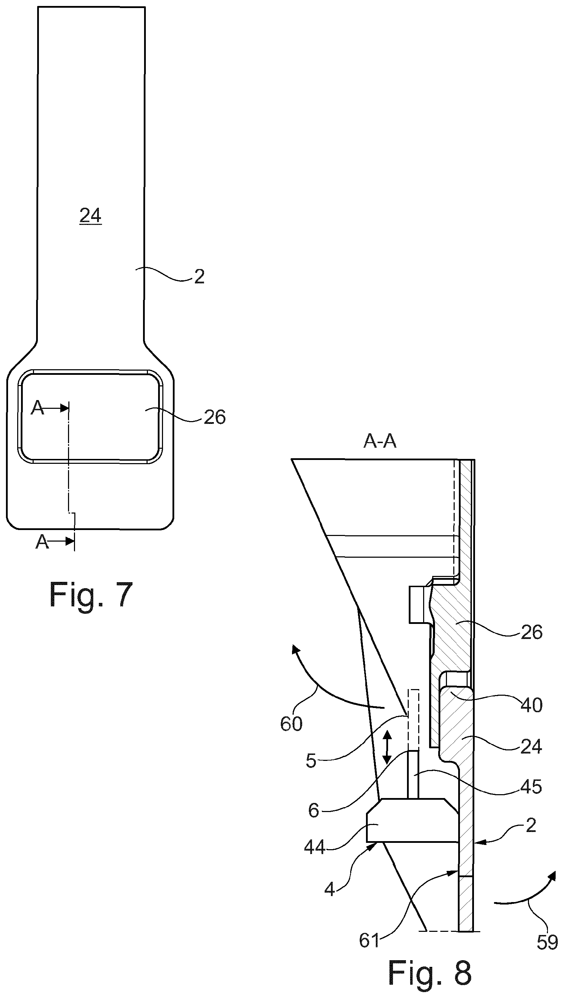

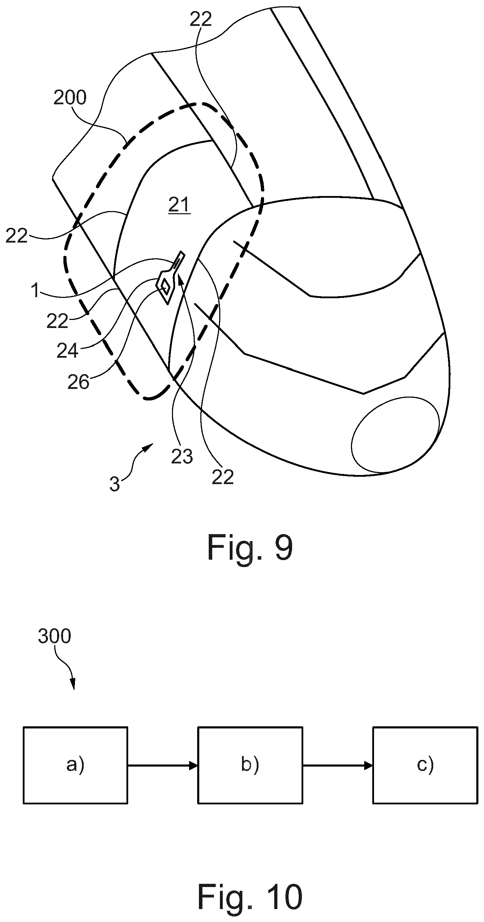

Das Funktionsprinzip des Zugangskontrollsystems 100 ist wie folgt: Um die Zugangskontrollvorrichtung 1 mit elektrischer Energie zu versorgen, wird der portable Energiespeicher 10 in der Ausnehmung 15 der Energieversorgungsschnittstelle 7 positioniert. Anschließend wird die portable Berechtigungseinheit 20 an die Nahfeldkommunikationsschnittstelle 9 gehalten. Sofern die darauf gespeicherte, digitale Zugangsberechtigung gültig ist, wird das Stellelement 4 (vergleiche Figur 5 und Figur 8) derart betätigt, dass eine Tür 21 (vergleiche Figur 9) verriegelt oder entriegelt werden kann.

Um die Sicherheit noch weiter zu steigern, kann die Energieversorgungsschnittstelle 7 eine zusätzliche Nahfeldkommunikationsschnittstelle 19 umfassen, die zum Auslesen einer zusätzlichen, digitalen Zugangsberechtigung aus einer zusätzlichen Zugangsberechtigungseinheit 39, die Bestandteil des portablen Energiespeichers 10 ist, eingerichtet ist. Durch das Anschließen des portablen Energiespeichers 10 an die Energieversorgungsschnittstelle 7 kann die zusätzliche, digitale Zugangsberechtigung von der zusätzlichen Berechtigungseinheit 39, die beispielsweise durch einen NFC-Tag gebildet sein kann, automatisch mittels der zusätzlichen Nahfeldkommunikationsschnittstelle 19 ausgelesen werden, ohne dass der portable Energiespeicher 10 in eine extra dafür vorgesehene Position gebracht werden müsste. Die zusätzliche Nahfeldkommunikationsschnittstelle 19 muss aber nicht zwangsläufig vorgesehen sein.

Um dem Benutzer Rückmeldung darüber zu geben, ob die auf der portablen Berechtigungseinheit 20 und der zusätzlichen Berechtigungseinheit 39 gespeicherten, digitalen Zugangsberechtigungen gültig sind, ist eine erste Anzeigeeinrichtung 37 und eine zweite Anzeigeeinrichtung 38 vorgesehen. Wird beispielsweise eine portable Berechtigungseinheit 20 mit ungültiger Zugangsberechtigung an die Nahfeldkommunikationsschnittstelle 9 gehalten, dann leuchtet die erste Anzeigeeinrichtung 37 auf, die beispielsweise das Textfeld "FAULT" umfassen kann. Wird jedoch eine portable Berechtigungseinheit 20 mit gültiger Zugangsberechtigung an die Nahfeldkommunikationsschnittstelle 9 gehalten und ist auch die zusätzliche Zugangsberechtigung gültig, dann leuchtet die zweite Anzeigeeinrichtung 38 auf, die beispielsweise das Textfeld "REMOVE" umfassen kann; der Benutzer erkennt dadurch, dass seine Zugangsberechtigung erfolgreich geprüft und für gültig befunden wurde, er die Berechtigungseinheit 20 sowie den portablen Energiespeicher 10 wieder von den Schnittstelle 7 und 9 entfernen und schließlich die Tür 21 (vergleiche Figur 9) öffnen kann. Die Beleuchtung der Anzeigeeinrichtungen 37 und 38 erfolgt mittels LEDs.

Die Steuerung bzw. Regelung des Stellelements 4 durch die Steuereinheit 8 auf Basis der gültigen Zugangsberechtigungen wird nachfolgend noch im Detail erläutert. Zur Ansteuerung und Energieversorgung des in dieser Figur nicht dargestellten Stellelements 4 ist eine elektrische Schnittstelle 35 an dem Gehäuse vorgesehen. Weiterhin ist eine Datenschnittstelle 36 an dem Gehäuse 11 in Form einer USB-Schnittstelle vorgesehen, sodass die Steuereinheit 8 bei Bedarf aktualisiert werden kann. So können beispielsweise ungültige Zugangsberechtigungen gelöscht bzw. deaktiviert werden und gültige Zugangsberechtigungen hinterlegt werden bzw. aktiviert werden.

Der portable Energiespeicher 10 sowie die portable Berechtigungseinheit 20 sind mittels Kordel 27 und Ring 28 miteinander verbunden, so dass sie von einem Benutzer einfach transportiert werden können. Es versteht sich von selbst, dass das Design der Berechtigungseinheit 20 und/oder des Energiespeichers 10 entsprechend den Wünschen des Benutzers angepasst werden kann; dies betrifft sowohl die graphische Gestaltung als auch die Materialauswahl.

Anhand der Figuren 2 bis 6 wird nachfolgend die Verwendung der Zugangskontrollvorrichtung 1 an einem Türgriff 24 einer Tür 21 eines Passagiereingangs eines Flugzeugs vom Hersteller Airbus beschrieben.

In Figur 2 ist der Türgriff 24 mit der daran fest montierter Zugangskontrollvorrichtung 1 zu erkennen. Der Türgriff 24 umfasst eine Greifkante 40, die durch eine verschwenkbar gelagerte Klappe 26 zugänglich gemacht werden kann. Die Klappe 26 gibt die Greifkante 40 dann frei, wenn die folgenden drei Bedingungen erfüllt sind: Erstens, muss die Energieversorgungsschnittstelle 7 mittels des portablen Energiespeichers 10 mit Energie versorgt werden. Zweitens, muss die mittels der Nahfeldkommunikationsschnittstelle 9 ausgelesene Zugangsberechtigung gültig sein. Drittens, muss die mittels der zusätzlichen Nahfeldkommunikationsschnittstelle 19 ausgelesene zusätzliche Zugangsberechtigung ebenfalls gültig sein.

Figur 3 zeigt den Türgriff 24 ohne die daran montierte Zugangskontrollvorrichtung 1. Dafür sind sechs Befestigungsbohrungen 41 in dem Türgriff 24 vorgesehen, von denen nur zwei mit Bezugszeichen versehen sind. An den Befestigungsbohrungen 41 kann die Zugangskontrollvorrichtung 1 unter Zuhilfenahme von Befestigungsmitteln, beispielsweise in Form von Bolzen oder Schrauben, mittels ihres Gehäuses 11 an dem Türgriff 24 montiert werden. Weiterhin zeigt die Figur 3 eine Leitungsbohrung 42, durch die die Leitungen der Zugangskontrollvorrichtung 1 geführt werden können, die die Nahfeldkommunikationsschnittstelle 9 und die Energieversorgungsschnittstelle 7 mit der Steuereinheit 8 verbinden. Dementsprechend sind die Energieversorgungsschnittstelle 7 sowie die Nahfeldkommunikationsschnittstelle 9 auf einer Seite der Leitungsbohrung 42 angeordnet, wohingegen die Steuereinheit 8 auf der anderen Seite der Leitungsbohrung 42 angeordnet ist. Die Befestigungsbohrungen 41 und die Leitungsbohrungen 42 haben keinen Einfluss auf die Druckkabine des Flugzeugs, wodurch sich der Nachrüstaufwand erheblich verringert.

Figur 4 zeigt die Befestigung der Zugangskontrollvorrichtung 1 an dem Türgriff 24 in einer Explosionsdarstellung. Weiterhin ist das zweiteilige Gehäuse 11 zu erkennen, dass das erstes Gehäuseteil 29 und das zweites Gehäuseteil 30 umfasst. Das erste Gehäuseteil 29 ist auf einer Vorderseite 2 des Türgriffs 24 angeordnet und das zweite Gehäuseteil 30 auf der Rückseite 61 des Türgriffs 24. Damit der durch die beiden Gehäuseteile 29 und 30 gemeinsam mit dem Türgriff 24 gebildete Innenraum gegenüber der Umgebung abgedichtet ist, ist jeweils zwischen dem ersten Gehäuseteil 29 und dem Türgriff 24 sowie zwischen dem zweiten Gehäuseteil 30 und dem Türgriff 24 eine Dichtung 43 in Form einer umlaufenden Gummidichtung vorgesehen. Damit können die im Innenraum des Gehäuses 11 angeordneten Komponenten der Zugangskontrollvorrichtung 1 vor negativen Umgebungseinflüssen, wie beispielsweise Nässe und/oder Staub, geschützt werden.

Figur 5 zeigt die Rückseite 61 des Türgriffs 24. Es ist erkennbar, dass die Klappe 26 über eine Schwenkachse 25 verschwenkbar an dem übrigen Teil des Türgriffs 24 gelagert ist. Weiterhin ist das Stellelement 4 als Bestandteil der Zugangskontrollvorrichtung 1 zu erkennen. Es umfasst einen Aktuator 44 in Form eines Schaltmagneten sowie einen durch den Aktuator 44 verstellbaren Riegel 45. Je nach Verstellposition des Riegels 45 befindet sich das Stellelement 4 in einen Sperrzustand 5 oder in einem Freigabezustand 6. Es ist erkennbar, dass in dem Sperrzustand 5 der Riegel 45 die Verschwenkbarkeit der Klappe 26 blockiert und im Freigabezustand 6 eine Verschwenkbewegung der Klappe 26 ermöglicht wird, sodass ein Benutzer im Freigabezustand 6 die Greifkante 40 durch ein Verschwenken der Klappe 26 mit den Fingern umgreifen und durch eine Zugbewegung den Türgriff 24 betätigen kann. Wenn sich das Stellelement 4 in dem Sperrzustand 5 befindet ist die Klappe 26 blockiert, wodurch auch die Greifkante 40 für den Benutzer nicht zugänglich und damit nicht umgreifbar ist; folglich kann der Türgriff 24 in diesem Zustand nicht betätigt werden.

Das Stellelement 4 ist in dieser Ausführungsform monostabil ausgeführt, sodass es ohne Stromversorgung in den Sperrzustand 5 zurückkehrt. Grundsätzlich sind aber auch Ausführungsformen mit bistabil schaltbaren Stellelementen 4 denkbar. Um einem Benutzer auch nach dem Entfernen des portablen Energiespeichers 10 (vergleiche Figur 1) ausreichend Zeit zum Betätigen des Türgriffs 24 zu geben, ist ein Kondensator 55 (vgl. Figur 6) als Energiespeicher vorgesehen. Der Kondensator ist derart ausgelegt, dass das Stellelement 4 noch etwa 10 Sekunden nach dem Entfernen des portablen Energiespeichers 10 in dem Freigabezustand 6 verbleibt; anschließend wird das Stellelement 4 beispielsweise durch die Wirkung einer Federkraft wieder in den Sperrzustand 5 geschaltet.

Das Stellelement 4 ist mittels einer Klebeverbindung, die hier nicht sichtbar ist, an dem Türgriff 24 befestigt. Die Ansteuerung bzw. Energieversorgung des Stellelements 4 erfolgt über eine nicht dargestellte Leitung, die mit der elektrischen Schnittstelle 35 verbunden ist.

Figur 6 zeigt schematisch die Verschaltung bzw. Verkabelung der einzelnen Komponenten der Zugangskontrollvorrichtung 1. Auf der linken Seite ist das der Steuereinheit 8 zugeordnete zweite Gehäuseteil 30 samt den übrigen darin angeordneten Komponenten dargestellt. Auf der rechten Seite der Figur 6 sind die dem ersten Gehäuseteil 29 zugeordneten Komponenten der Zugangskontrollvorrichtung 1 dargestellt. Die auf der linken Seite der Figur 6 dargestellten Komponenten sind auf der Rückseite 61 des Türgriffs 24 in Figur 4 angeordnet, wohingegen die in der Figur 6 rechts dargestellten Komponenten auf der Vorderseite 2 des Türgriffs 24 in der Figur 4 angeordnet sind.

Die Steuereinheit 8 ist signaltechnisch bzw. elektrisch an ein Sende-Empfangsgerät 46 für Nahfeldkommunikation nach dem RFID-Standard angebunden. Mittels einer elektrischen bzw. signaltechnischen Verbindung 48 ist das Sende-Empfangsgerät 46 mit einem Sensorfeld 47, zur Nahfeldkommunikation nach dem RFID Standard verbunden. Das Sensorfeld 47 ist Bestandteil der Nahfeldkommunikationsschnittstelle 9.

Weiterhin ist die Steuereinheit 8 signaltechnisch bzw. elektrisch mit einem LED-Treiber 49 verbunden. Der LED-Treiber 49 ist mittels einer elektrischen bzw. signaltechnischen Verbindung 50 mit der ersten und zweiten Anzeigeeinrichtung 37 und 38 verbunden.

Weiterhin ist die Steuereinheit 8 signaltechnisch bzw. elektrisch mit einem USB-Controller 51 verbunden. Mittels einer signaltechnischen bzw. elektrischen Verbindung 52 ist der USB-Controller 51 mit der Datenschnittstelle 36 verbunden.

Weiterhin ist die Steuereinheit 8 signaltechnisch bzw. elektrisch mit einem Leistungsmodul 53 verbunden. Mittels der signaltechnischen bzw. elektrischen Verbindung 54 ist das Leistungsmodul 53 mit den elektrischen Kontakte 31 der Energieversorgungsschnittstelle 7 verbunden.

Weiterhin ist die Steuereinheit 8 elektrisch mit dem Kondensator 55 verbunden, der wiederum über die elektrische Verbindung 56 mit der elektrischen Schnittstelle 35, über die das Stellelement 4 mit elektrischer Energie versorgbar ist, verbunden ist.

Die zusätzliche Nahfeldkommunikationsschnittstelle 19 ist über eine nicht dargestellte Verbindung genau wie die Nahfeldkommunikationsschnittstelle 9 mit dem Sende-Empfangsgerät 46 verbunden.

Die Steuereinheit 8 umfasst einen nicht dargestellten Datenspeicher sowie einen ebenfalls nicht dargestellten Prozessor, so dass die Steuereinheit 8 grundsätzlich sowohl zum Steuern als auch zum Regeln des Stellelements 4 genutzt werden kann.

Die Steuereinheit 8, das Sende-/Empfangsgerät 46, der LED-Treiber 49, der USB-Controller 51, das Leistungsmodul 53 sowie der Kondensator 56 sind bei dieser Ausführungsform auf einer gemeinsamen Leiterplatte 57 angeordnet.

Weiterhin zeigt Figur 6 eine im Inneren des Gehäuses 11 angeordnete Batterie 58, die jedoch nicht dazu eingerichtet ist, das Stellelement 4 mit Energie zu versorgen. Aus Sicherheitsgründen ist die Zugangskontrollvorrichtung 1 dazu eingerichtet, das Stellelement 4 ausschließlich über die an der Außenseite 12 des Gehäuses 11 angeordneten Energieversorgungsschnittstelle 7 mit Energie zu versorgen. Die Batterie 58 kann beispielsweise zur Versorgung der Anzeigeeinrichtungen 37 und 38 mit elektrischer Energie genutzt werden.

In Abweichung zu den Ausführungsformen der Figuren 2 bis 6, zeigt die Figur 7 einen Türgriff 24 einer Frachttür eines Flugzeugs vom Hersteller Airbus. Dieser Türgriff 24 weist im Vergleich zu den in den Figuren 2 bis 5 dargestellten Ausführungsformen eine abweichende Geometrie auf, wobei auch hier eine Klappe 26 vorgesehen ist. Das Funktionsprinzip ist daher identisch.

Figur 8 zeigt eine Schnittansicht entlang der Schnittlinie A-A aus Figur 7, wobei das Stellelement 4 lediglich schematisch dargestellt ist. Um den Türgriff 24 in eine Öffnungsstellung zu bringen, muss dieser in Richtung des Pfeils 59 verschwenkt werden. Um die entsprechende Zugkraft durch einen Benutzer auf den Türgriff 24 auszuüben, muss dieser die Greifkante 40 umgreifen können. Diese wird jedoch nur dann freigegeben, wenn die Klappe 26 in Richtung des Pfeils 60 verschwenkbar ist. Befindet sich das Stellelement 4 in dem Freigabezustand 6, dann ist dies möglich, weil die Klappe 26 ungehindert an dem Riegel 45 vorbei bewegt werden kann. Wenn sich das Stellelement 4 jedoch in dem gestrichelt dargestellten Sperrzustand 5 befindet, wird die Öffnungsbewegung der Klappe 26 durch den Riegel 45 blockiert. Der Benutzer kann die Greifkante 40 nicht umgreifen und damit den Türgriff 24 nicht in Richtung des Pfeils 59 bewegen.

Figur 9 zeigt ein Luftfahrzeug 3 in Form eines Flugzeugs mit einem Türabschnitt 200, umfassend eine Tür 21, einen Türrahmen 22 und ein Türschloss 23. Mit dem Türschloss 23 kann die Tür 21 in einer geschlossenen Stellung in dem Türrahmen 22 verriegelt werden. Weiterhin umfasst das Türschloss 23 zur Betätigung den Türgriff 24, an dem eine Zugangskontrollvorrichtung 1 montiert ist. Bei dem dargestellten Türabschnitt 200 handelt es sich um einen Türabschnitt 200 mit einer Passagiertür, so dass bezüglich des Aufbaus und der Funktionsweise der Zugangskontrollvorrichtung 1 auf die in den Figuren 1 bis 6 dargestellten Ausführungsformen verwiesen werden kann.

In Figur 10 ist schematisch ein Verfahren 300 zum Öffnen einer im verschlossenen Zustand verriegelten Tür 21 des in Figur 9 dargestellten Türabschnittes 200 dargestellt.

In einem Verfahrensschritt a) erfolgt ein energietechnisches Verbinden des portablen Energiespeichers 10 mit der Energieversorgungsschnittstelle 7 (vgl. beispielsweise Figur 1). Die Zugangskontrollvorrichtung 1 wird dann über die Energieversorgungsschnittstelle 7 mit Energie versorgt. In diesem Verfahrensschritt wird dann ohne das Zutun des Benutzers die zusätzliche Zugangsberechtigung, die auf der zusätzlichen Berechtigungseinheit 39 des portablen Energiespeichers 10 hinterlegt ist, mittels der zusätzlichen Nahfeldkommunikationsschnittstelle 19 der Energieversorgungsschnittstelle 7 ausgelesen. Mittels der Steuereinheit 8 (vgl. beispielsweise Figur 6) wird dann die Gültigkeit der zusätzlichen Zugangsberechtigung geprüft.

Anschließend wird in einem Verfahrensschritt b) die portable Berechtigungseinheit 20 mit der Nahfeldkommunikationsschnittstelle 9 signaltechnisch verbunden. Es wird so die auf der portablen Berechtigungseinheit 20 gespeicherte Zugangsberechtigung mittels der Nahfeldkommunikationsschnittstelle 9 (vergleiche Figur 1) ausgelesen und an die Steuereinheit 8 (vergleiche Figur 8) übermittelt.

Wenn durch die Steuereinheit 8 beide digitalen Zugangsberechtigungen als gültig verifiziert wurden und die Energieversorgungsschnittstelle 7 nach wie vor durch den portablen Energiespeicher 10 mit Energie versorgt wird, dann wird das in Figur 5 gezeigte Stellelement 4 von dem Sperrzustand 5 in den Freigabezustand 6 geschaltet, sodass durch Freigabe der Klappe 26 der in Figur 9 gezeigte Türgriff 24 betätigt werden kann.

Durch die Betätigung des Türgriffs 24 kann Tür 21 dann entriegelt und damit auch in einem Verfahrensschritt c) geöffnet werden.

## Patentansprüche

1. Zugangskontrollvorrichtung (1) für eine Tür (21) eines Fahrzeugs, insbesondere eines Luftfahrzeugs (3), umfassend
- ein Stellelement (4), das von einem Sperrzustand (5) in einen Freigabezustand (6) und umgekehrt bringbar ist;
- eine Energieversorgungsschnittstelle (7), über die die Zugangskontrollvorrichtung (1) mit Energie versorgbar ist;
- eine Steuereinheit (8), die dazu eingerichtet ist, den Zustand des Stellelements (4) zu steuern und/oder zu regeln;
- eine Nahfeldkommunikationsschnittstelle (9), die zum Auslesen einer digitalen Zugangsberechtigung und Übermitteln der digitalen Zugangsberechtigung an die Steuereinheit (8) eingerichtet ist; wobei
- die Steuereinheit (8) dazu eingerichtet ist, den Zustand des Stellelements (4) in Abhängigkeit der Gültigkeit der digitalen Zugangsberechtigung zu steuern und/oder zu regeln; wobei
- die Energieversorgungsschnittstelle (7) zum Anschließen eines portablen Energiespeichers (10) ohne Zuhilfenahme von Werkzeug eingerichtet ist, **dadurch gekennzeichnet, dass**
- die Energieversorgungsschnittstelle (7) eine zusätzliche Nahfeldkommunikationsschnittstelle (19) umfasst, die zum Auslesen einer zusätzlichen digitalen Zugangsberechtigung und Übermitteln der zusätzlichen digitalen Zugangsberechtigung an die Steuereinheit (8) eingerichtet ist, wobei
- ein entsprechendes Steuersignal, das die Bewegung des Stellelements in den Freigabezustand (6) oder in den Sperrzustand (5) bewirkt, erst dann generiert wird, wenn die folgenden drei Bedingungen erfüllt sind:
- erstens, die Energieversorgungsschnittstelle (7) wird mittels des portablen Energiespeichers (10) mit Energie versorgt;
- zweitens, die über die Nahfeldkommunikationsschnittstelle (9) ausgelesene digitale Zugangsberechtigung ist gültig;
- drittens, die über die zusätzliche Nahfeldkommunikationsschnittstelle (19) ausgelesene zusätzliche digitale Zugangsberechtigung ist ebenfalls gültig.

2. Zugangskontrollvorrichtung (1) nach Anspruch 1, **dadurch gekennzeichnet, dass**
- die Steuereinheit (8) dazu eingerichtet ist, die Gültigkeit einer über die Nahfeldkommunikationsschnittstelle (9) übermittelten Zugangsberechtigung zu verifizieren, wobei
- die Steuereinheit (8) dazu eingerichtet ist, ein Steuersignal zu generieren, wenn die digitale Zugangsberechtigung mittels der Steuereinheit (8) als gültig verifiziert wurde und die Energieversorgungsschnittstelle (7) mittels eines portablen Energiespeichers (10) mit Energie versorgt wird.

3. Zugangskontrollvorrichtung (1) nach einem der vorangehenden Ansprüche, **dadurch gekennzeichnet, dass**
- die Zugangskontrollvorrichtung (1) ein Gehäuse (11) umfasst, das einen Innenraum bildet, wobei
- zumindest die Steuereinheit (8) in dem Innenraum angeordnet ist, wobei
- die Energieversorgungsschnittstelle (7) auf der dem Innenraum abgewandten Außenseite (12) des Gehäuses (11) angeordnet ist.

4. Zugangskontrollvorrichtung (1) nach einem der vorangehenden Ansprüche, **dadurch gekennzeichnet, dass**
- sowohl die Energieversorgungsschnittstelle (7) als auch die Nahfeldkommunikationsschnittstelle (9) Bestandteil einer gemeinsamen Bedienoberfläche (13) sind.

5. Zugangskontrollvorrichtung (1) nach einem der vorangehenden Ansprüche, **dadurch gekennzeichnet, dass**
- die Energieversorgungsschnittstelle (7) ein Halteelement (14) umfasst, das dazu eingerichtet ist, einen portablen Energiespeicher (10) an der Energieversorgungsschnittstelle (7) zu halten, so dass die Energieversorgungsschnittstelle (7) durch den portablen Energiespeicher (10) mit Energie versorgt wird.

6. Zugangskontrollvorrichtung (1) nach einem der vorangehenden Ansprüche, **dadurch gekennzeichnet, dass**
- die Energieversorgungsschnittstelle (7) eine Ausnehmung (15) aufweist, in die der portable Energiespeicher (10) einsetzbar ist.

7. Zugangskontrollvorrichtung (1) nach einem der vorangehenden Ansprüche, **dadurch gekennzeichnet, dass**
- die Energieversorgungsschnittstelle (7) und/oder die Nahfeldkommunikationsschnittstelle (9) jeweils durch wenigstens ein visuelles Mittel (16, 17, 18) für einen Nutzer kenntlich gemacht sind.

8. Zugangskontrollvorrichtung (1) nach einem der vorangehenden Ansprüche, **dadurch gekennzeichnet, dass**
- das Stellelement (4) bistabil oder monostabil schaltbar ist.

9. Zugangskontrollvorrichtung (1) nach Anspruch 8, **dadurch gekennzeichnet, dass**
- das Stellelement (4) monostabil schaltbar ist, wobei
- ein Kondensator (55) zur temporären Versorgung des Stellelements (4) mit elektrischer Energie vorgesehen ist, so dass das Stellelement (4) für eine vordefinierte Zeitspanne im instabilen Zustand verbleiben kann, wenn die Energieversorgungsschnittelle (7) nicht mit Energie versorgt wird.

10. Zugangskontrollsystem (100) für Türen (21) eines Fahrzeugs, insbesondere eines Luftfahrzeugs (3), **dadurch gekennzeichnet, dass** das Zugangskontrollsystem (100) umfasst:
- eine Zugangskontrollvorrichtung (1) nach einem der vorangehenden Ansprüche;
- eine portable Berechtigungseinheit (20), auf der eine digitale Zugangsberechtigung für die Nahfeldkommunikationsschnittstelle (9) der Zugangskontrollvorrichtung (1) abrufbar gespeichert ist; und
- einen portablen Energiespeicher (10), der dazu eingerichtet ist, die Zugangskontrollvorrichtung (1) mittels der Energieversorgungsschnittstelle (7) mit Energie zu versorgen.

11. Türabschnitt (200), insbesondere eines Fahrzeugs, umfassend
- eine Tür (21);
- einen Türrahmen (22); und
- ein Türschloss (23), das dazu eingerichtet ist, die Tür (21) in einer geschlossenen Stellung in dem Türrahmen (22) zu verriegeln, **dadurch gekennzeichnet, dass**
- eine Zugangskontrollvorrichtung (1) nach einem der Ansprüche 1 bis 9 vorgesehen ist, wobei
- das Stellelement (4) derart mit dem Türschloss (23) zusammenwirkt, dass die Verriegelung der Tür (21) aufgehoben oder aufhebbar ist, wenn sich das Stellelement (4) in dem Freigabezustand (6) befindet.

12. Türabschnitt (200) nach Anspruch 11, **dadurch gekennzeichnet, dass**
- das Türschloss (23) einen Türgriff (24) umfasst, mit dem je nach dessen Stellung die Tür (21) in dem Türrahmen (22) verriegelt oder freigegeben ist, wobei
- das Stellelement (4) dazu eingerichtet ist, in dem Sperrzustand (5) eine Betätigbarkeit des Türgriffs (24) zu verhindern, und wobei
- das Stellelement (4) dazu eingerichtet ist, in dem Freigabezustand (6) eine Betätigbarkeit des Türgriffs (24) zuzulassen.

13. Türabschnitt (200) nach einem der Ansprüche 11 oder 12, **dadurch gekennzeichnet, dass**
- der Türgriff (24) eine um eine Schwenkachse (25) verschwenkbare Klappe (26) umfasst, wobei
- der Türgriff (24) nur dann in eine die Tür (21) entriegelnde Stellung bringbar ist, wenn die Verschwenkbarkeit der Klappe (26) gegeben ist, wobei
- das Stellelement (4) in dem Freigabezustand (6) eine Verschwenkbarkeit der Klappe (26) zulässt; und wobei
- das Stellelement (4) in dem Sperrzustand (5) eine Verschwenkbarkeit der Klappe (26) unterbindet.

14. Verfahren (300) zum Öffnen einer geschlossenen und verriegelten Tür (21) eines Türabschnittes (200) nach einem der Ansprüche 11 bis 13, **gekennzeichnet durch** die folgenden Verfahrensschritte:
a) energietechnisches Verbinden des portablen Energiespeichers (10) mit der Energieversorgungsschnittstelle (7); und anschließendes
b) signaltechnisches Verbinden einer portablen Berechtigungseinheit (20) mit der Nahfeldkommunikationsschnittstelle (9); und anschließendes
c) Öffnen der Tür (21).

## Claims

1. Access control device (1) for a door (21) of a vehicle, in particular an aircraft (3), comprising
- an actuation element (4), which can be brought from a blocking state (5) into a release state (6) and vice versa;
- a power supply interface (7), by means of which the access control device (1) can be supplied with power;
- a control unit (8), which is designed to carry out open-loop and/or closed-loop control of the state of the actuation element (4);
- a near-field communication interface (9), which is designed to read out a digital access authorisation and to transmit the digital access authorisation to the control unit (8); wherein
- the control unit (8) is designed to carry out open-loop and/or closed-loop control of the state of the actuation element (4) in accordance with the validity of the digital access authorisation; wherein
- the power supply interface (7) is designed for the connecting of a portable energy store (10) without the use of tools, **characterised in that**
- the power supply interface (7) comprises an additional near-field communication interface (19) which is adapted to read an additional digital access authorization and transmit the additional digital access authorization to the control unit (8), wherein
- a corresponding control signal, which effects the movement of the actuation element into the release state (6) or into the blocking state (5), is only generated if the following three conditions are met:
- firstly, the power supply interface (7) is supplied with power by means of the portable energy store (10);
- secondly, the digital access authorization read out via the near-field communication interface (9) is valid;
- thirdly, the additional digital access authorization read out via the additional near-field communication interface (19) is also valid.

2. Access control device (1) according to claim 1, **characterised in that**
- the control unit (8) is designed to verify the validity of an access authorisation transmitted via the near-field communication interface (9), wherein
- the control unit (8) is designed to generate a control signal if the digital access authorisation has been verified as valid by means of the control unit (8) and the power supply interface (7) is supplied with power by means of a portable energy store (10).

3. Access control device (1) according to any one of the preceding claims, **characterised in that**
- the access control device (1) comprises a housing (11) which forms an interior space, wherein
- at least the control unit (8) is arranged in the interior space, wherein
- the power supply interface (7) is arranged on the outer side (12) of the housing (11) facing away from the interior space.

4. Access control device (1) according to any one of the preceding claims, **characterised in that**
- both the power supply interface (7) and the near-field communication interface (9) are part of a common operating interface (13).

5. Access control device (1) according to any one of the preceding claims, **characterised in that**
- the power supply interface (7) comprises a holding element (14), which is designed to hold a portable energy store (10) on the power supply interface (7) so that the power supply interface (7) is supplied with power by the portable energy store (10).

6. Access control device (1) according to any one of the preceding claims, **characterised in that**
- the power supply interface (7) has a recess (15), into which the portable energy store (10) can be inserted.

7. Access control device (1) according to any one of the preceding claims, **characterised in that**
- the power supply interface (7) and/or the near-field communication interface (9) are each identified for a user by at least one visual means (16, 17, 18).

8. Access control device (1) according to any one of the preceding claims, **characterised in that**
- the actuation element (4) can be switched bistable or monostable.

9. Access control device (1) according to claim 8, **characterised in that**
- the actuation element (4) can be switched monostable, wherein
- a capacitor (55) is provided for temporarily supplying the actuation element (4) with electrical power, so that the actuation element (4) can remain in the unstable state for a predefined period of time if the power supply interface (7) is not supplied with power.

10. Access control system (100) for doors (21) of a vehicle, in particular an aircraft (3), **characterised in that** the access control system (100) comprises:
- an access control device (1) according to any one of the preceding claims;
- a portable authorisation unit (20), on which a digital access authorisation for the near-field communication interface (9) of the access control device (1) is retrievably stored; and
- a portable energy store (10), which is designed to supply the access control device (1) with power by means of the power supply interface (7).

11. Door portion (200), in particular of a vehicle, comprising
- a door (21);
- a door frame (22); and
- a door lock (23), which is designed to lock the door (21) in a closed position in the door frame (22), **characterised in that**
- an access control device (1) according to any one of claims 1 to 9 is provided, wherein
- the actuation element (4) interacts with the door lock (23) in such a way that the locking of the door (21) is released or can be released when the actuation element (4) is in the release state (6).

12. Door portion (200) according to claim 11, **characterised in that**
- the door lock (23) comprises a door handle (24), with which the door (21) is locked or released in the door frame (22) depending on the position of the handle, wherein
- the actuation element (4) is designed to prevent the door handle (24) from being actuated in the blocking state (5), and wherein
- the actuation element (4) is designed to allow the door handle (24) to be actuated in the release state (6).

13. Door portion (200) according to either of claims 11 or 12, **characterised in that**
- the door handle (24) comprises a flap (26) pivotable about a pivot shaft (25), wherein
- the door handle (24) can only be brought into a position that unlocks the door (21) if the flap (26) can be pivoted, wherein
- the actuation element (4) in the release state (6) allows the flap (26) to be pivoted; and wherein
- the actuation element (4) in the blocking state (5) prevents the flap (26) from being pivoted.

14. Method (300) for opening a closed and locked door (21) of a door portion (200) according to any one of claims 11 to 13, **characterised by** the following method steps:
a) energy-transmitting connection of the portable energy store (10) to the power supply interface (7); and subsequent
b) signal-transmitting connection of a portable authorisation unit (20) to the near-field communication interface (9); and subsequent
c) opening of the door (21).

## Revendications

1. Dispositif de contrôle d'accès (1) pour une porte (21) d'un véhicule, en particulier d'un aéronef (3), comprenant
- un actionneur (4) qui peut être amené d'un état de blocage (5) à un état de libération (6) et inversement ;
- une interface d'alimentation en énergie (7) via laquelle le dispositif de contrôle d'accès (1) peut être alimenté en énergie ;
- une unité de commande (8) qui est configurée pour commander et/ou pour régler l'état de l'actionneur (4) ;
- une interface de communication en champ proche (9) qui est configurée pour lire une autorisation d'accès numérique et transmettre l'autorisation d'accès numérique à l'unité de commande (8) ; dans lequel
- l'unité de commande (8) est configurée pour commander et/ou pour régler l'état de l'actionneur (4) en fonction de la validité de l'autorisation d'accès numérique ; dans lequel
- l'interface d'alimentation en énergie (7) est configurée pour raccorder un accumulateur d'énergie portable (10) sans l'aide d'outil, **caractérisé en ce que**
- l'interface d'alimentation en énergie (7) comprend une interface de communication en champ proche supplémentaire (19) qui est configurée pour lire une autorisation d'accès numérique supplémentaire et transmettre l'autorisation d'accès numérique supplémentaire à l'unité de commande (8), dans lequel
- un signal de commande correspondant qui entraîne le déplacement de l'actionneur à l'état de libération (6) ou à l'état de blocage (5), n'est généré que lorsque les trois conditions suivantes sont remplies :
- premièrement, l'interface d'alimentation en énergie (7) est alimentée en énergie au moyen de l'accumulateur d'énergie portable (10) ;
- deuxièmement, l'autorisation d'accès numérique lue via l'interface de communication en champ proche (9) est valide ;
- troisièmement, l'autorisation d'accès numérique supplémentaire lue via l'interface de communication en champ proche supplémentaire (19) est également valide.

2. Dispositif de contrôle d'accès (1) selon la revendication 1, **caractérisé en ce que**
- l'unité de commande (8) est configurée pour vérifier la validité d'une autorisation d'accès transmise via l'interface de communication en champ proche (9), dans lequel
- l'unité de commande (8) est configurée pour générer un signal de commande lorsque l'autorisation d'accès numérique a été vérifiée comme étant valide au moyen de l'unité de commande (8) et que l'interface d'alimentation en énergie (7) est alimentée en énergie au moyen d'un accumulateur d'énergie portable (10).

3. Dispositif de contrôle d'accès (1) selon l'une des revendications précédentes, **caractérisé en ce que**
- le dispositif de contrôle d'accès (1) comprend un boîtier (11) qui forme un espace intérieur, dans lequel
- au moins l'unité de commande (8) est agencée dans l'espace intérieur, dans lequel
- l'interface d'alimentation en énergie (7) est agencée sur le côté extérieur (12) du boîtier (11) opposé à l'espace intérieur.

4. Dispositif de contrôle d'accès (1) selon l'une des revendications précédentes, **caractérisé en ce que**
- l'interface d'alimentation en énergie (7) et l'interface de communication en champ proche (9) font toutes deux partie d'une surface de commande commune (13).

5. Dispositif de contrôle d'accès (1) selon l'une des revendications précédentes, **caractérisé en ce que**
- l'interface d'alimentation en énergie (7) comprend un élément de maintien (14) qui est configuré pour maintenir un accumulateur d'énergie portable (10) sur l'interface d'alimentation en énergie (7), de telle sorte que l'interface d'alimentation en énergie (7) est alimentée en énergie par l'accumulateur d'énergie portable (10).

6. Dispositif de contrôle d'accès (1) selon l'une des revendications précédentes, **caractérisé en ce que**
- l'interface d'alimentation en énergie (7) comporte un évidement (15) dans lequel l'accumulateur d'énergie portable (10) peut être inséré.

7. Dispositif de contrôle d'accès (1) selon l'une des revendications précédentes, **caractérisé en ce que**
- l'interface d'alimentation en énergie (7) et/ou l'interface de communication en champ proche (9) sont respectivement identifiées pour un utilisateur par au moins un moyen visuel (16, 17, 18).

8. Dispositif de contrôle d'accès (1) selon l'une des revendications précédentes, **caractérisé en ce que**
- l'actionneur (4) peut être commuté de manière bistable ou monostable.

9. Dispositif de contrôle d'accès (1) selon la revendication 8, **caractérisé en ce que**
- l'actionneur (4) peut être commuté de manière monostable, dans lequel
- un condensateur (55) est prévu pour alimenter temporairement l'actionneur (4) en énergie électrique, de telle sorte que l'actionneur (4) peut rester dans l'état instable pendant un intervalle de temps prédéfini lorsque l'interface d'alimentation en énergie (7) n'est pas alimentée en énergie.

10. Système de contrôle d'accès (100) pour des portes (21) d'un véhicule, en particulier d'un aéronef (3), **caractérisé en ce que** le système de contrôle d'accès (100) comprend :
- un dispositif de contrôle d'accès (1) selon l'une des revendications précédentes ;
- une unité d'autorisation portable (20) sur laquelle une autorisation d'accès numérique pour l'interface de communication en champ proche (9) du dispositif de contrôle d'accès (1) est stockée de manière récupérable ; et
- un accumulateur d'énergie portable (10) qui est configuré pour alimenter en énergie le dispositif de contrôle d'accès (1) au moyen de l'interface d'alimentation en énergie (7).

11. Partie de porte (200), en particulier d'un véhicule, comprenant
- une porte (21) ;
- un châssis de porte (22) ; et
- une serrure de porte (23) qui est configurée pour verrouiller la porte (21) dans une position fermée dans le châssis de porte (22), **caractérisée en ce que**
- un dispositif de contrôle d'accès (1) selon l'une des revendications 1 à 9 est prévu, dans laquelle
- l'actionneur (4) coopère avec la serrure de porte (23) de telle sorte que le verrouillage de la porte (21) est libéré ou peut être libéré lorsque l'actionneur (4) est dans l'état de libération (6).

12. Partie de porte (200) selon la revendication 11, **caractérisée en ce que**
- la serrure de porte (23) comprend une poignée de porte (24) avec laquelle la porte (21) est verrouillée ou déverrouillée dans le châssis de porte (22) en fonction de la position de la poignée, dans laquelle
- l'actionneur (4) est configuré pour empêcher d'actionner la poignée de porte (24) dans l'état de blocage (5), et dans laquelle
- l'actionneur (4) est configuré pour permettre d'actionner la poignée de porte (24) dans l'état de libération (6).

13. Partie de porte (200) selon l'une des revendications 11 ou 12, **caractérisée en ce que**
- la poignée de porte (24) comprend un volet (26) pouvant pivoter autour d'un axe de pivotement (25), dans laquelle
- la poignée de porte (24) ne peut être amenée dans une position déverrouillant la porte (21) que lorsque le volet (26) peut pivoter, dans laquelle
- l'actionneur (4) dans l'état de libération (6) permet au volet (26) de pivoter ; et dans laquelle
- l'actionneur (4) dans l'état de blocage (5) empêche le volet (26) de pivoter.

14. Procédé (300) pour ouvrir une porte fermée et verrouillée (21) d'une partie de porte (200) selon l'une des revendications 11 à 13, **caractérisé par** les étapes de procédé suivantes consistant à :
a) raccorder par transmission d'énergie l'accumulateur d'énergie portable (10) à l'interface d'alimentation en énergie (7) ; puis
b) raccorder par transmission de signaux une unité d'autorisation portable (20) à l'interface de communication en champ proche (9) ; puis
c) ouvrir la porte (21).
